# EUROPÄISCHE PATENTANMELDUNG

(11) **EP 1 310 315 A1**
(43) Veröffentlichungstag der Anmeldung: **14.05.2003**
(21) Anmeldenummer: 01811090.8
(22) Anmeldetag: 13.11.2001
(51) Int. Cl.: B23D 61/18

(54) **Sägegarn**

(71) Anmelder: sia Abrasives Industries AG, 8501 Frauenfeld (CH)
(72) Erfinder: Jentgens, Christian, CH-8360 Eschlikon/TG (CH)
(74) Vertreter: Hepp, Dieter

(57) **Zusammenfassung**

Die vorliegende Erfindung betrifft ein Sägegarn, umfassend eine Schleifmischung (2) enthaltend ein Bindeharz und Schleifmaterial, sowie ein Multi-Filament aus reissfesten Fasern (1), welche im wesentlichen parallel zueinander angeordnet und von der Schleifmischung (2) umhüllt sind, wobei der Raum zwischen den Fasern (1) mit der Schleifmischung (2) gefüllt ist, zum Schneiden von hartspröden Materialien wie beispielsweise monokristallinem Silicium.

## Beschreibung

Die vorliegende Erfindung betrifft ein Sägegarn, ein Verfahren zu seiner Herstellung sowie dessen Verwendung zum Schneiden bzw. Teilen von harten Werkstoffen wie beispielsweise monokristallinem Silicium.

Dünne Scheiben aus sprödharten Materialien finden in zahlreichen technischen Bereichen Anwendung. Als prominentes Beispiel sei nur die Verwendung sogenannter Silicium-Wafer in der Halbleitertechnologie erwähnt. Derartige Scheiben werden in der Regel aus Blöcken oder Einkristallen der entsprechenden Materialien durch Schneide- oder Trennvorgänge gewonnen. Herkömmlich werden diese Schneide- oder Trennvorgänge unter Verwendung eines Sägedrahts aus Stahl in Gegenwart eines Schleifmittels durchgeführt. In der Regel wird das Schleifmittel in Form einer losen Aufschlämmung während des Schneidevorgangs auf den Sägedraht gebracht, um das Schneiden des Werkstoffs zu ermöglichen. Eine derartige Vorrichtung ist beispielhaft in der US-4,187,828 gezeigt. Dieses herkömmliche Verfahren leidet jedoch unter dem Nachteil, dass sich der Sägedraht während des Arbeitsvorgangs stark abnutzt und in der Regel nur einmal verwendet werden kann. Zudem fallen bei der Verwendung von losen Aufschlämmungen von Schleifmaterial in nicht unerheblichem Masse nicht recyclebare Abfälle an.

Es hat daher Bemühungen gegeben, den Sägedraht durch direktes Aufbringen des Schleifmittels auf dessen Oberfläche widerstandsfähiger zu machen. So ist in der EP-A-0 982 094 ein Sägedraht beschrieben, bei der ein Sägedraht aus Stahl über eine haftvermittelnde Zwischenschicht mit einer metallischen Bindephase verbunden ist, in der das Schleifmittel, beispielsweise Diamantkörner, eingelagert ist. Eine ähnliche Drahtsäge ist auch in der US-4,485,757 beschrieben. Derartige Sägedrahte sind aber im Herstellungsprozess kostspielig. Zudem leiden sie oft unter dem Problem der Wasserstoffversprödung und daraus resultierenden Spontanbrüchen.

In der JP-A-207598 ist ein Sägedraht beschrieben, der aus einem Pianodraht und Schleifpartikeln besteht, die auf der Oberfläche des Drahts mittels eines bestimmten Bindemittels befestigt sind. Das Bindemittel ist aufgrund der Zugabe von Additiven wie Metallteilchen widerstandsfähiger gegen äussere Einflüsse. In der US-5,313,742 sind Schneideräder beschrieben, die aufgrund ihres einstückigen Aufbaus mit einer grösseren Dicke im mittleren, nichtschneidenden Bereich und einer geringeren Dicke in den äusseren Schneidebereichen eine erhöhte Festigkeit aufweisen. Das Schneiderad besteht aus einem Bindeharz, in das Schleifpartikel gemischt sind.

Die vorstehend beschriebenen Schneidewerkzeuge erfüllen die an sie gestellten Anforderungen hinsichtlich der Verwendung zum Schneiden von hartspröden Werkstoffen jedoch nicht optimal. Gerade bei teuren Werkstoffen wie einkristallinem Silicium sollten die Schnittbreiten sehr gering sein, um den Schnittverlust so klein wie möglich zu halten. Naturgemäss erhöht sich der Durchmesser des Schneidewerkzeugs durch Auftragen einer das Schleifmittel enthaltenden Schicht auf den Draht, wodurch die Schnittbreite erhöht wird. Bei Verwendung von Schleifmittel in Form einer losen Aufschlämmung muss mit hohen Schnittgeschwindigkeiten von etwa 1000 m/min gearbeitet werden, um ein Mitreissen der Schleifpartikel und somit einen Schnitt zu erreichen. Das führt zu einem starken Temperaturanstieg und macht eine Wasserkühlung während des Schneideprozesses unumgänglich. Bei Verwendung von Diamant als Schleifmaterial kommt es aufgrund des sehr guten Wärmeleitfähigkeitseigenschaften dieses Materials selbst bei Wasserkühlung zu lokal stark erhöhten Temperaturen und somit zu einer erheblichen Belastung für das Schneidewerkzeug und einem daraus resultierenden schnelleren Verschleiss. Ist das Schleifmittel auf der Oberfläche des Schneidewerkzeugs befestigt, wird das Schneidewerkzeug nach Abtragung dieser Oberflächenschicht unbrauchbar, was aufgrund der vorstehend beschriebenen Bedingungen während des Schneidens hartspröder Werkstoffe sehr schnell geschieht.

Schneidewerkzeuge auf der Basis von Garn-Multifilamenten wurden bisher zum Schneiden von hartspröden Materialien noch nicht beschrieben. In der WO 93/18891 ist eine Bürste zum Polieren von Oberflächen beschrieben, welche aus einem thermoplastischen Polymer mit darin befindlichen Schleifpartikeln besteht. Es wird aber in dieser Schrift ausdrücklich darauf hingewiesen, dass die dort beschriebenen Strukturen sich insbesondere hinsichtlich der Zugfestigkeit von Strukturen unterscheiden, bei denen ein vorgeformtes Kernmaterial nachträglich mit einer Beschichtung aus mit Schleifmittel gefülltem thermoplastischen Elastomer überzogen wird. Es ist nicht beschrieben, dass die dort aufgeführten Filamente zum Schneiden von hartspröden Materialien verwendet werden können.

Verbundmaterialien mit einem Kern aus Fasermaterial und einer dieses Fasermaterial umfüllenden Polymermatrix sind grundsätzlich bekannt. Beispielsweise ist in der US-5,068142 ein derartiges faserverstärktes Verbundmaterial zur Verwendung im Baugewerbe beschrieben, beispielsweise zur Verhinderung von Erdrutschen. Dieses Verbundmaterial besteht aus einer Vielzahl von Fasern und weist eine Gesamtdicke im Bereich von mehreren Millimetern oder mehr auf.

Es bestand daher die Aufgabe der vorliegenden Erfindung, ein Schneidewerkzeug bereitzustellen, mit welchem die vorstehend beschriebenen Nachteile aus dem Stand der Technik überwunden werden können.

Die vorstehende Aufgabe wird erfindungsgemäss durch ein Sägegarn gelöst, umfassend eine Schleifmischung enthaltend ein Bindeharz und Schleifmaterial, sowie ein Multi-Filament aus reissfesten Fasern, welche im wesentlichen parallel zueinander angeordnet und von der Schleifmischung umhüllt sind, wobei der Raum zwischen den Fasern mit der Schleifmischung gefüllt ist.

Gemäss einer bevorzugten Ausführungsform der vorliegenden Erfindung weist das Sägegarn eine Dicke von gleich oder weniger als 150 µm auf.

Gemäss einer bevorzugten Ausführungsform der vorliegenden Erfindung weist das Sägegarn eine Dicke von 125-150 µm auf.

Gemäss der vorliegenden Erfindung wird unter Multi-Filament ein Verbundmaterial verstanden, dass aus vielen einzelnen Fasern aufgebaut ist.

Überraschend wurde gefunden, dass die erfindungsgemässen Sägegarne sich hervorragend zum Schneiden von hartspröden Materialien eignen. Durch die Verwendung von vergleichsweise wenig Fasern im Bereich von 400-1000 Fasern, vorzugsweise 600-800 Fasern, weist das Verbundmaterial einen Durchmesser von etwa 125 bis 150 µm auf, wodurch Schnittbreiten von weniger oder gleich 150 µm erreicht werden können. Im Gegensatz zu den Schneidewerkzeugen aus dem Stand der Technik, bei denen lediglich auf der Oberfläche eines Metalldrahts eine schleifmittelhaltige Schicht vorhanden ist und die folglich nach Abnutzung dieser Oberfläche unbrauchbar werden, ist bei dem erfindungsgemässen Sägegarn eine Schleifmischung zwischen den einzelnen Fasern vorhanden. Bei Abrieb der Oberfläche des Sägegarns wird somit während des Arbeitsvorgangs neues Schleifmittel im Innern des Schleifgrans freigelegt, welches das ursprünglich an der Oberfläche befindliche und durch Verschleiss verlorengegangene Schleifmittel ersetzen kann. Mit dem erfindungsgemässen Sägegarn lassen sich somit deutlich erhöhte Standzeiten beim Schneiden von hartspröden Materialien erreichen.

Zudem kann das Schneiden hartspröder Materialien mit den erfindungsgemässen Sägegarnen bei niedrigeren Schnittgeschwindigkeiten durchgeführt werden. Dadurch wird die Belastung des Schneidewerkzeugs aufgrund von während des Schneidens auftretenden erhöhten Temperaturen verringert. Zudem wird eine sorgfältigere Verfahrensführung möglich, welche präzisere Schnitte mit weniger Schnittverlust erlaubt. Eine Zuführung einer losen Aufschlämmung von Schleifmaterial ist nicht notwendig.

Das erfindungsgemässe Sägegarn, ist wie nachstehend geschildert, auf einfache und kostengünstige Weise darstellbar.

Die vorliegende Erfindung wird nachstehend anhand von veranschaulichenden und nicht einschränkenden Zeichnungen näher erläutert. Es zeigt:

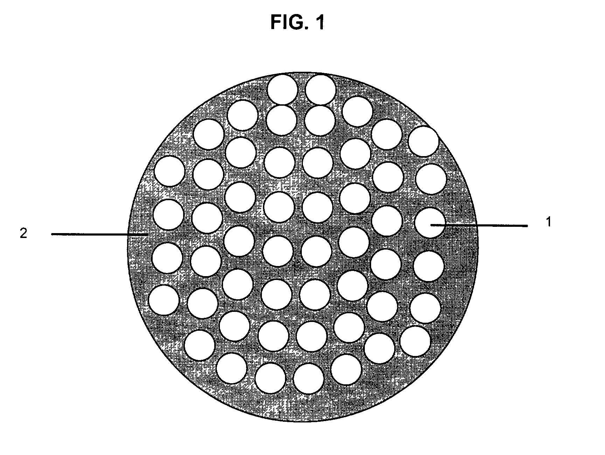

- FIG. 1: einen Querschnitt durch ein erfindungsgemässes Sägegarn.

Wie in Fig. 1 gezeigt umfasst das erfindungsgemässe Sägegarn ein Multi-Filament aus reissfesten Fasern (1), welche in einer Schleifmischung (2) eingebettet im wesentlichen parallel zueinander angeordnet sind und durch die Schleifmischung (2) voneinander getrennt sind. Das erfindungsgemässe Sägegarn umfasst 400 bis 1000, vorzugsweise 600 bis 800 einzelne Fasern (1). Daraus ergibt sich eine Dicke des Sägegarns von gleich oder weniger als 150 µm, vorzugsweise 125-150 µm. Die Fasern weisen vorzugsweise einen im wesentlichen runden Querschnitt auf, wobei andere Formen erfindungsgemäss ebenfalls möglich sind.

Die Fasern (1) können aus Materialien gefertigt sein, die zur Herstellung von faserverstärkten Werkstoffen eingesetzt werden. Beispielsweise seien Fasern aus m- und/oder p-Aramid (aromatisches Polyamid), ultrahochfestem Polyethylen, hochorientiertem Polyester, Polyester, Polyamid, Kohlefasern oder Glasfasern genannt. Erfindungsgemäss bevorzugt ist die Verwendung von Fasern aus m-Aramid, welche von den Firma Du Pont unter der Marke Nomex® und von der Firma Teijin unter der Marke Teijinconex® vertrieben werden, und/oder p-Aramid, welche von der Firma Du Pont unter der Marke Kevlar®, von der Firma Twaron unter der Marke Twaron® und von der Firma Teijin unter der Marke Technora® vertrieben werden, und/oder von Fasern aus ultrahochfestem Polyethylen, welche von der Firma Toyobo unter der Marke Dyneema® vertrieben werden.

Die Fasern (1) müssen eine Reissfestigkeit aufweisen, welche den Anforderungen des Prozesses des Schneidens von hartspröden Werkstoffen genügt. Gemäss der vorliegenden Anmeldung soll daher unter einer reissfesten Faser eine Faser verstanden werden, welche eine Zugfestigkeit (tensile strength) von mehr als 25 cN/tex bzw. mehr als 300 MPa aufweist. Die vorstehend aufgeführten Fasermaterialien erfüllen diese Anforderung.

Aufgrund der niedrigeren Schnittgeschwindigkeiten, die bei Verwendung des erfindungsgemässen Sägegarns zum Schneiden von hartspröden Materialien erforderlich sind, können auch Materialien zur Herstellung des Sägegarns eingesetzt werden, die für herkömmliche Schneidewerkzeuge aufgrund der bei deren Verwendung auftretenden hohen Temperaturen ungeeignet wären.

Wie aus Fig. 1 ersichtlich sind die Fasern (1) im wesentlichen parallel zueinander in eine Schleifmischung (2) eingebettet. Die Schleifmischung (2) enthält ein Bindeharz und Schleifmaterial.

Das Bindeharz kann erfindungsgemäss ein Festharz oder ein Flüssigharz sein. Es kann sich hierbei um bekannte thermoplastische oder duroplastische Polymere handeln. Beispielsweise seien Thermoplaste wie Polyimide, Polybenzimidazole, Polycarbonate, Polyethylenterephthalate, Polybutylenterephthalate, Polyamide, Polyphenylenether, Polyphenylensulfide, Polyaryletherketone oder Duroplaste wie beispielsweise härtbare Phenolharze, härtbare Phenol-Formaldehyd-Harze, Polyimidharze, Bismaleinimide, Epoxidharze, ungesättigte Polyesterharze, DAP-Harze (Polydiallylphthalat), MF-Formmassen wie beispielsweise Melamin-Formaldehyd-Formmassen, härtbare Melamin-Phenol-Formaldehyd-(MPF)-Formmassen oder vernetzte Polyurethane genannt. Bevorzugte Materialien sind hierbei von den Thermoplasten Polyethylenterephthalate, Polybutylenterephthalate, Polycarbonate oder Polyamide, während von den Duroplasten insbesondere härtbare Phenolharze, Epoxidharze, härtbare Phenol-Formaldehyd-Harze, MF-Formmassen wie beispielsweise Melamin-Formaldehyd-Formmassen und härtbare Melamin-Phenol-Formaldehyd-(MPF)-Formmassen bevorzugt sind. Erfindungsgemäss sind duroplastische Materialien besonders bevorzugt.

Das Bindeharz enthält das Schleifmaterial in dispergierter Form. Erfindungsgemäss bevorzugt handelt es sich hierbei um feinklassierten Diamant, Siliciumcarbid (SiC), Al₂O₃, sowie die sogenannten Super-Abrasives wie kubisches Bornitrid (c-BN), TiC, ZrC, HfC, Gemische aus diesen Carbiden, TiN, ZrN, HfN, oder Gemische aus diesen Nitriden. Erfindungsgemäss bevorzugt ist die Verwendung von feinklassiertem Diamant als Schleifmaterial. Die Schleifpartikel haben vorzugsweise eine Grösse von 1 bis 20 µm, besonders bevorzugt 5 bis 15 µm.

Die Schleifmischung umfasst gemäss der vorliegenden Erfindung 0,1 Gew.-% bis 60 Gew.-%, vorzugsweise 25 Gew.-% bis 50 Gew.-% Schleifmaterial, bezogen auf das Gesamtgewicht der Schleifmischung.

Je nach gewünschter Anwendung beträgt dass Gewichtsverhältnis von Fasern zu Schleifmischung 4:1 bis 1:4. Der Fachmann kann das Gewichtsverhältnis problemlos unter Berücksichtigung der erforderlichen Eigenschaften des Sägegarns optimieren.

Die Schleifmischung kann weiterhin herkömmliche Additive wie Trennmittel, Gleitmittel, Füllstoffe, Pigmente, Haftvermittler, Stabilisatoren, Inhibitoren oder Beschleunigersysteme enthalten. Diese Additive sind dem Fachmann grundsätzlich bekannt und können von diesem entsprechend dem Anforderungsprofil des Sägegarns problemlos ausgewählt werden.

Die Schleifmischung kann, falls das gewählte Beschichtungsverfahren nicht die Zugabe der einzelnenen Komponenten gestattet, auf einfache, dem Fachmann bekannte Weise durch Mischen der einzelnen Bestandteile, beispielsweise in einer Kugelmühle, hergestellt werden.

Wie vorstehend erwähnt kann das erfindungsgemässe Sägegarn auf einfache Weise hergestellt werden. Die Fasern sind käuflich erhältlich und werden in Form eines Faserstrangs aus 400 bis 1000, vorzugsweise 600-800 Fasern bereitgestellt. Dieser Faserstrang wird anschliessend mit der Schleifmischung beschichtet beziehungsweise gefüllt.

Die Beschichtung und/oder Füllung kann beispielsweise mittels des Schmelzbeschichtungsverfahrens durchgeführt werden. Hierbei wird der zu beschichtende bzw. zu füllende Faserstrang durch eine das Bindeharz umfassende Schmelze gezogen und anschliessend abgekühlt.

Ein anderes Verfahren zur Beschichtung und/oder Füllung der Fasern ist das Nassimprägnierverfahren. Der Faserstrang wird auf einem sogenannten Roving-Gestell bereitgestellt und von diesem mit einer Geschwindigkeit von etwa 300-400 m/min abgewickelt. Die abgewickelten Fasern werden durch ein flüssiges Imprägnierbad gezogen, in welchem neben dem Bindeharz das Schleifmittel sowie gegebenenfalls weitere Additive enthalten sind. Anschliessend muss das Lösungsmittel durch Abdampfen entfernt werden, was durch Aufwärts- und Abwärtsziehen der beschichteten Fasern durch einen "Kühlturm" mit unterschiedlichen Temperaturzonen erfolgt.

Bei einer Alternative dieses Verfahrens wird die abgewickelte Faser mit Hilfe einer Sprühbeschichtungsvorrichtung mit der Schleifmischung überzogen und gefüllt. Aus einer oberhalb der Fasern angeordneten drehbaren Vorrichtung wird die gegebenenfalls unter Druck gelöste Schleifmischung auf die Fasern gesprüht. Unterhalb der zu besprühenden Fasern befindet sich eine Auffangvorrichtung, in welcher die nicht auf die Fasern aufgebrachte Schleifmischung gesammelt und zur erneuten Verwendung der drehbaren Vorrichtung oberhalb der Fasern zugeführt wird. Die Entfernung des Lösungsmittels erfolgt analog zu oben.

Alternativ kann das Beschichten und/oder Füllen der Faserstränge auch durch ein Trockenbeschichtungsverfahren erfolgen. Ein derartiges Verfahren ist beispielsweise in der EP-A-0 680 813 beschrieben, auf deren diesbezüglichen Inhalt hiermit ausdrücklich Bezug genommen wird. Hierbei werden die Faserstränge analog zum Nassimprägnierverfahren von einem Rovinggestell abgewickelt. Vorzugsweise werden sie zunächst mit einer Geschwindigkeit von etwa 400-600 m/min durch eine Vorrichtung geführt, in der sie elektrisch aufgeladen werden. Dadurch wird das Anhaften der Schleifmischung an den Fasern begünstigt. Anschliessend werden sie durch ein Wirbelsinterbad geführt, in welchem sich die fertige Schleifmischung in Pulverform befindet. Durch Löcher im Wannenboden wird Luft oder ein Inertgas in das Wirbelsinterbad hineingeblasen, wodurch ein wallendes Pulverbad entsteht. Das Pulver bleibt an den durch das Wirbelsinterbad gezogenen Fasern haften. Anschliessend werden die so erhaltenen überzogenen Fasern erwärmt. Dies erfolgt vorzugsweise durch Bestrahlung mit infrarotem Licht. Das auf den Fasern befindliche Bindeharz wird hierbei zumindest teilweise verflüssigt, wodurch eine Einstellung der Menge an auf die Fasern aufzutragender Schleifmischung möglich ist. Die Faserstränge können durch weiteres Erhitzen in einem Ofen und anschliessendes Führen durch Kalibrieröffnungen hinsichtlich ihres Aussendurchmessers eingestellt werden.

Gemäss einer in der WO 99/36239 beschriebenen bevorzugten Variante, auf deren diesbezüglichen Inhalt hiermit ausdrücklich Bezug genommen wird, können die einzelnen Komponenten der Schleifmischung im Trockenbeschichtungsverfahren auch ohne vorangehende Compoundierung auf die Faserstränge aufgebracht werden. Hierzu werden die einzelnen Komponenten in das Wirbelsinterbad gebracht. Dort erfolgt ein Mischen beziehungsweise Durchmischen beispielsweise mit Hilfe eines Rotors, Rührers, mit Ultraschall und/oder elektromagnetischen Wellen. Der Mischvorgang muss so durchgeführt werden, dass eine Entmischung der einzelnen Komponenten im Wirbelsinterbad weitgehend verhindert beziehungsweise aufgehoben wird. Die weitere Verarbeitung erfolgt analog zum obigen Trockenbeschichtungsverfahren.

Das erfindungsgemässe Sägegarn kann vorteilhaft zum Schneiden beziehungsweise Teilen von hartspröden Werkstoffen verwendet werden. Das Schneiden kann gemäss einem der hierfür verwendeten Verfahren durchgeführt werden. Vorteilhafterweise wird hierbei der Werkstoff und das Sägegarn extern mittels eines Kühlmittels wie beispielsweise Wasser gekühlt.

Das erfindungsgemässe Sägegarn eignet sich insbesondere zum Schneiden beziehungsweise Teilen von monokristallinenem Silicium, das gewöhnlich durch das Zonenschmelzverfahren in Form langer Stangen (Ingots) hergestellt wird und für die Halbleiterindustrie in kleine Scheiben (Wafer) geschnitten werden muss. Weiterhin können Materialien wie Silciumcarbid (für die Raumfahrtindustrie), Saphir (für Uhrengläser oder zur Herstellung von Leuchtdioden mit blauem Licht (blue LEDs), Quarz, Smaragd, Rubin, Keramik oder Al₂O₃ geschnitten werden.

Durch Verwendung des erfindungsgemässen Sägegarns kann der Schnittprozess mit Schnittgeschwindigkeiten deutlich unter 1000 m/min durchgeführt werden, ohne dass dies zu Einbussen hinsichtlich der Geschwindigkeit des Arbeitsvorgangs führt. Mit dem erfindungsgemässen Sägegarn können selbst bei geringeren Schnittgeschwindigkeiten höhere Abträge erzielt werden. Die geringere Schnittgeschwindigkeit erlaubt eine höhere Präzision des Arbeitsvorgangs sowie den Einsatz von Materialien, die bei herkömmlichen Schneidewerkzeugen aufgrund der dort beim Schneidevorgang herrschenden hohen Temperaturen nicht eingesetzt werden können.

## Patentansprüche

1. Sägegarn, umfassend eine Schleifmischung enthaltend ein Bindeharz und Schleifmaterial, sowie ein Multi-Filament aus reissfesten Fasern, welche vorzugsweise im wesentlichen parallel zueinander angeordnet und von der Schleifmischung umhüllt sind, wobei der Raum zwischen den Fasern mit der Schleifmischung gefüllt ist.

2. Sägegarn nach Anspruch 1, wobei das Sägegarn eine Dicke von gleich oder weniger als 150 µm aufweist.

3. Sägegarn nach Anspruch 1, wobei das Sägegarn eine Dicke von 125-150 µm aufweist.

4. Sägegarn nach einem der Ansprüche 1 bis 3, wobei die Fasern aus einem Material aus der Gruppe, bestehend aus m- und/oder p-Aramid, ultrahochfestem Polyethylen, hochorientiertem Polyester, Polyester, Polyamid, Kohlefasern oder Glasfasern, aufgebaut sind.

5. Sägegarn nach Anspruch 4, wobei die Fasern aus m-Aramid, p-Aramid oder ultrahochfestem Polyethylen aufgebaut sind.

6. Sägegarn nach einem der Ansprüche 1 bis 5, wobei das Bindeharz aus einem thermoplastischen oder duroplastischen Polymer aufgebaut ist.

7. Sägegarn nach Anspruch 6, wobei das Bindeharz aus einem duroplastischen Polymer aufgebaut ist.

8. Sägegarn nach Anspruch 7, wobei das duroplastische Polymer aus der Gruppe, bestehend aus härtbaren Phenolharzen, Epoxidharzen, härtbaren Phenol-Formaldehyd-Harzen, MF-Formmassen und härtbaren Melamin-Phenol-Formaldehyd-(MPF)-Formmassen, ausgewählt ist.

9. Sägegarn nach einem der Ansprüche 1 bis 8, wobei das Schleifmaterial aus der Gruppe, bestehend aus feinklassiertem Diamant, Siliciumcarbid (SiC), Al₂O₃, kubischem Bornitrid (c-BN), TiC, ZrC, HfC, Gemischem aus diesen Carbiden, TiN, ZrN, HfN, oder Gemischem aus diesen Nitriden, ausgewählt ist.

10. Sägegarn nach Anspruch 9, wobei das Schleifmaterial feinklassierter Diamant ist.

11. Verfahren zur Herstellung eines Sägegarns nach einem der Ansprüche 1 bis 10, umfassend die Schritte
a) Bereitstellung eines Multifilaments aus reissfesten Fasern
b) Beschichten bzw. Füllen dieses Multi-Filaments mit einer Schleifmischung, umfassend ein Bindeharz und Schleimaterial, und
c) Weitere Verarbeitung des so erhaltenen Multi-Filaments.

12. Verfahren nach Anspruch 11, wobei das Beschichten bzw. Füllen im Schritt b) durch ein Nassimprägnierverfahren oder ein Trockenbeschichtungsverfahren erfolgt.

13. Verfahren nach Anspruch 12, wobei der Schritt b) mit einem Trockenbeschichtungsverfahren durch Ziehen des Multi-Filaments durch eine Wirbelschicht durchgeführt wird.

14. Sägegarn, erhältlich nach einem der Verfahren 11 bis 13.

15. Verwendung eines Sägegarns zum Schneiden von hartspröden Werkstoffen.

16. Verwendung nach Anspruch 15 wobei es sich bei dem Sägegarn um ein Sägegarn gemäss einem der Ansprüche 1 bis 10 oder 14 handelt.

17. Verwendung nach Anspruch 15 oder 16, wobei das hartspröde Material aus der Gruppe, bestehend aus monokristallinenem Silicium, Silciumcarbid, Saphir, Quarz, Smaragd, Rubin, Keramik oder Al₂O₃, ausgewählt ist.
